(19) Europäisches Patentamt
European Patent Office
Office européen des brevets

(11) EP 1 473 320 A2

(12) # EUROPEAN PATENT APPLICATION

(43) Date of publication:
**03.11.2004 Bulletin 2004/45**

(51) Int Cl.[7]: **C08K 5/3492**, C09D 7/12

(21) Application number: **04010047.1**

(22) Date of filing: **28.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **28.04.2003 US 424471**

(71) Applicant: **E. I. du Pont de Nemours and Company**
**Wilmington, Delaware 19898 (US)**

(72) Inventors:
- **Uhlianuk, Peter William**
  **Romeo Michigan 48065 (US)**
- **Langford, Jeffrey G.**
  **Addison Michigan 49220 (US)**

(74) Representative:
**Freiherr von Wittgenstein, Arved, Dr.**
**Abitz & Partner,**
**Poschingerstrasse 6**
**81679 München (Bogenhausen) (DE)**

(54) **Coatings that contain monomeric or polymeric melamines with attached functional silane groups**

(57) A sprayable coating composition containing a film-forming polymer capable of reacting with melamine, e.g., an organosilane polymer, a volatile organic liquid carrier, and a melamine crosslinking agent for the polymer. Functional silane groups are incorporated in the melamine for reduced viscosity, which leads to higher spray solids and lower volatile organic content. The coating composition can be used as a clearcoat over a conventional pigmented basecoat.

EP 1 473 320 A2

## Description

### BACKGROUND OF THE INVENTION

This invention is directed to a coating composition useful for providing a finish on a variety of substrates. In particular, this invention is directed to an organosilane composition which cures to provide mar and etch resistant coatings particularly useful for finishing automobiles and trucks.

In order to protect and preserve the aesthetic qualities of the finish on a vehicle, it is generally known to provide a clear (unpigmented) topcoat over a colored (pigmented) basecoat, so that the basecoat remains unaffected even on prolonged exposure to the environment or weathering. It is also generally known that compositions containing alkoxysilane polymers and melamine crosslinking agents provide top coatings with excellent resistance to etching from acid rain and other environmental pollutants, along with good scratch and mar resistance. Exemplary of prior art literature disclosing such coatings are U.S. Pat Nos. 5,244,696 and 5,223,495.

Continuing effort has been directed to such coating systems to improve the overall appearance, including gloss and DOI (distinctness of image), the clarity of the topcoat, and the resistance to weathering. Further effort has been directed to the development of topcoat coating compositions having low volatile organic content (VOC). A continuing need still exists for topcoat coating formulations, which provide excellent appearance, including high gloss and DOI, and outstanding performance characteristics after application and cure, particularly scratch and mar resistance and resistance to environmental etching, and which are derived from compositions that are characterized by low levels of volatile organic chemicals such as solvents and the like. Heretofore, due to the high viscosity of the melamine component, a considerable amount of solvent is required to adequately adjust the spray viscosity of the formulation, which results in lower spray solids and higher VOCs than desired. Much of the past activity to reduce spray viscosity without increasing VOC has been via addition of silicone oils, but these materials do not react with the film forming components present in the paint and thus remain as an unreacted component in the final film, which can lead to deterioration of properties or delamination of the film upon aging. The instant invention overcomes the forgoing problems.

### SUMMARY OF THE INVENTION

The invention concerns a sprayable, curable, liquid coating composition useful as an automotive topcoat finish comprising a film-forming polymer, preferably an organosilane polymer, a volatile organic liquid carrier, and a melamine crosslinking agent for said polymer, wherein the improvement is the use of a monomeric or polymeric silylated melamine crosslinking agent, also referred to herein as a monomeric or polymeric melamine crosslinking agent with attached functional silane groups, which is the reaction product of:

a.) a melamine of the formula

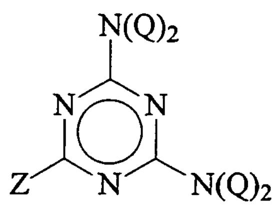

with

an epoxy-functional alkoxysilane of the formula

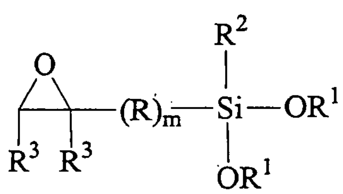

or,

b.) a melamine of the formula

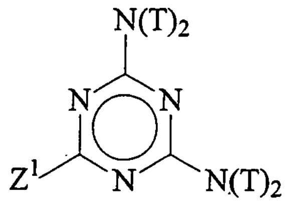

with
an isocyanate-containing alkoxysilane of the formula

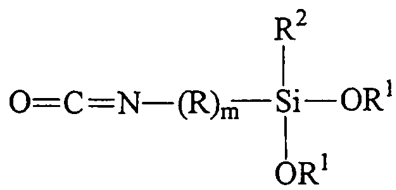

wherein
each Q is independently selected from the group consisting of hydrogen or alkoxy groups, provided at least one Q is hydrogen, and
Z is selected from the group consisting of a group represented by the formula $-N(Q)_2$, or a group represented by the formula

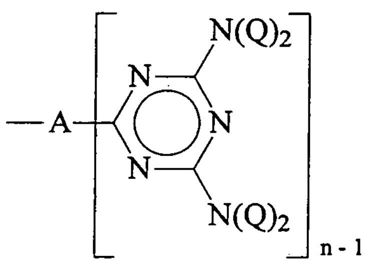

wherein
A is an N-functional anchor,
n is at least 2, and
Q is as defined above;
each R is a moiety independently selected from the group consisting of alkylene, cycloalkylene, heterocyclic, arylene, alkoxylene, aralkylene, alkenylene, cycloalkylene and low molecular weight polymer moiety;
each $R^1$ is independently hydrogen or $C_1$-$C_{12}$ alkyl;
each $R^2$ is independently hydroxy, $C_1$-$C_{12}$ alkyl or $C_1$-$C_{12}$ alkoxy;
each $R^3$ is independently hydrogen or $C_1$-$C_{12}$ alkyl; or $R^3$ can be taken together to form a $C_3$-$C_{12}$ cycloalkyl;
m is an integer from 1 to 16; and
each T is independently selected from the group consisting of $C_1$-$C_{12}$ alkylol or alkoxy groups, provided at least one T is an $C_1$-$C_{12}$ alkylol group; and
$Z^1$ is selected from the group consisting of a group represented by the formula $-N(T)_2$, or a group represented by the formula

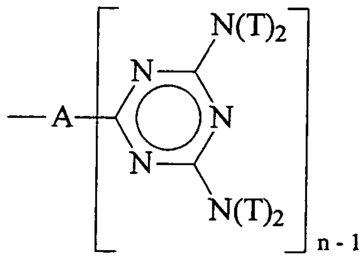

wherein
A, T and n are as defined above.

A process for coating a substrate with the above coating composition and a substrate such as a vehicle body or part thereof having adhered thereto a coating derived from the above composition also form part of this invention.

The invention also includes certain novel oligomeric and polymeric melamines with attached functional silane groups that are suited for use as crosslinking agents in the above coating compositions. The presence of functional silane groups on the melamine not only reduces the viscosity of the melamine, but also gives the melamine dual functionality, thus enabling additional crosslinking to occur between the functional silane groups themselves and between the functional silane groups and other crosslinking components such as hydroxy groups present in the composition.

The coating composition of the invention is especially useful for forming a clear topcoat over a pigmented basecoat. Such a clear topcoat can be applied over a variety of colorcoats, such as water or organic solvent based colorcoats or powder colorcoats.

## DETAILED DESCRIPTION OF THE INVENTION

Hereafter, R, $R^1$, $R^2$, $R^3$, Z, $Z^1$, A, Q, T, n and m are as defined above except where indicated.

This invention provides a coating composition useful for finishing the exterior of automobile and truck bodies.

The coating composition of this invention primarily is used as a clear coat over a pigmented base coat containing solid color pigments or metallic flake pigments or mixtures thereof. The coating composition also can be used as a conventional pigmented composition. The coating composition can be applied with conventional spray equipment and cured at ambient temperatures or slightly elevated temperatures which decrease drying time. The resulting finish has excellent gloss and distinctness of image and weatherability. The coating composition also offers a significant improvement over conventionally used automotive finishes in terms of spray solids and VOCs.

The invention is based on the discovery that by attaching alkoxy silanes to standard monomeric or polymeric melamine crosslinkers, the viscosity of melamine can be dropped significantly, which leads to a drop in the viscosity of the paint and, in turn, higher spray solids and lower volatile organic content (VOC). The alkoxy silane also provides an additional site for crosslinking during the curing reaction. More specifically, the presence of alkoxy silane groups on the melamine enables additional crosslinking of the alkoxy silane moieties with themselves and/or with other crosslinking groups that may be present in the composition. The coatings are especially useful in automotive clearcoats.

The monomeric or polymeric melamine crosslinking agents with attached functional silane groups employed in the compositions of the present invention are selected from at least one of the 2 following groups.

1.) Epoxy-functional silanes reacted with monomeric or polymeric melamine containing at least one imino (-N-H) group.

A representative reaction scheme for preparing such compounds from a melamine having at least one imino group (i.e., where at least one Q is hydrogen) is as follows:

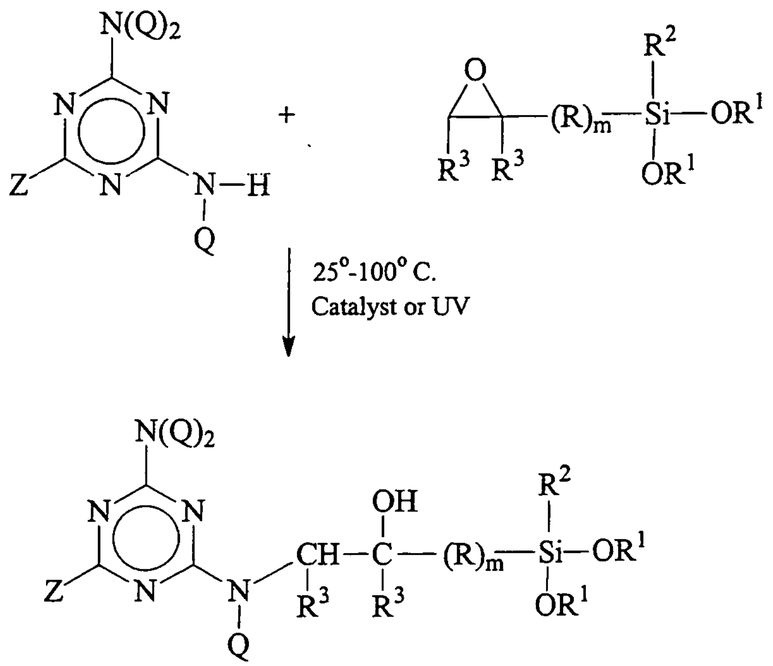


It should be understood that there can be reaction where the hydrogen on each Q reacts with the epoxy, thus allowing the addition of up to 6 epoxy silane units per melamine unit.

Regarding the epoxy silane component, representative low molecular weight polymers for R are polyester, polyurethane, polyether, polyamine and the like. By "low molecular weight" is meant no more than about 3000 (number average). Preferred for R are alkoxylenes of $C_1$ to $C_4$, most preferably $C_1$ to $C_2$ and m is 1. Preferred for $R^1$ are alkyls of $C_1$ to $C_4$, most preferably $C_1$ to $C_2$. Preferred for $R^2$ are alkoxy groups of $C_1$ to $C_4$, most preferably $C_1$ to $C_2$.

Preferred for $R^3$ are hydrogens. Q is preferably H or an alkoxy group of $C_1$ to $C_4$, most preferably $C_1$ to $C_2$, provided of course that at least one Q is H.

Typical examples of such epoxy silanes are glycidylpropyltrimethoxy silane, glycidylpropyltriethoxy silane and the like.

As to the imino melamine component, a wide variety of the commercially available monomeric or polymeric alkylated melamine formaldehyde crosslinking agents that are partially or fully alkylated can be used. Preferred for Q is a mixture of alkoxy of $C_1$ to $C_4$ and hydrogen groups and the degree of polymerization is preferably about 1-3. Examples of commercially available monomeric melamines include Resimene® 747 or Resimene® 755 supplied by Solutia Inc., St. Louis, Missouri, or Cymel® 301, Cymel® 302, Cymel® 303, Cymel® 325, Cymel®1161, and Cymel® 1168 supplied by Cytec Industries Inc., West Patterson, New Jersey. Suitable polymeric melamines include high imino (Partially alkylated, -N, -H) melamine known as Resimene® BM5503 (molecular weight 690, polydispersity of 1.98, 56% butyl, 44% imino), which is supplied by Solutia Inc., St. Louis, Missouri, or Cymel 1158 provided by Cytec Industries Inc., West Patterson, New Jersey. Such crosslinking agents typically have a number average molecular weight of about 300-600 and a weight average molecular weight of about 500-1500.

Most preferably is the reaction between glycidylpropyltrimethoxy silane and partially or fully alkylated (e.g., methylated, butylated, and/or isobutylated) monomeric or polymeric melamine.

2.) Isocyanate-containing alkoxysilanes reacted with a monomeric or polymeric melamine containing at least one alkylol (-N-Alkyl-OH) group.

A representative reaction mechanism for preparing such compounds from a melamine having at least one alkylol group, i.e., where at least one T is $R^3OH$, is as follows:

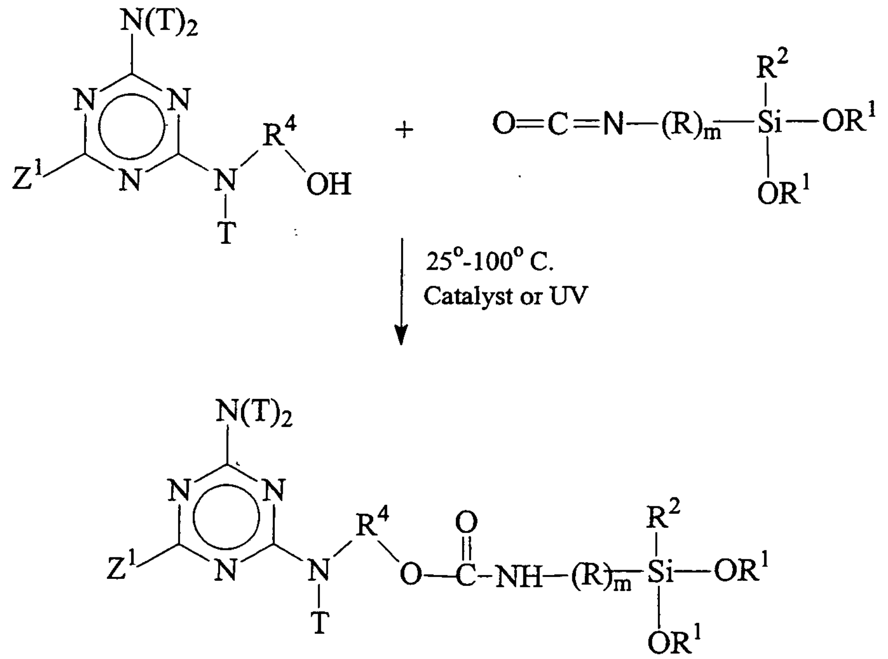


wherein
$R^4$ is a $C_1$-$C_{12}$ alkyl group.

It should be understood that there can be reaction where only one alkylol hydroxyl atom reacts with the isocyanate (as is shown above) or where an alkylol hydroxyl group placed on each T reacts with the isocyanate, thus allowing the addition of up to 6 isocyanate silane units per melamine monomer unit.

Preferred for R are alkyls of $C_1$ to $C_4$, most preferably $C_1$ to $C_2$. Preferred for $R^1$ are alkyls of $C_1$ to $C_4$, most preferably $C_1$ to $C_2$. Preferred for $R^2$ are alkoxy groups of $C_1$ to $C_4$, most preferably $C_1$ to $C_2$. T is preferably alkylol or an alkoxy group of $C_1$ to $C_4$, most preferably $C_1$ to $C_2$, provided of course that at least one Q is an alkylol group.

Typical examples of such isocyanate-containing silanes are 3-isocyanatopropyltrimethoxysilane, 3-isocyanatopropyltriethoxysilane, and the like.

As to the melamine component with alkylol groups, a wide variety of the commercially available monomeric or polymeric alkylated alkylol melamine formaldehyde crosslinking agents that are partially or fully alkylated can be used. Preferred for T is a mixture of alkoxy and alkylol groups. The degree of polymerization is preferably 1-3. Examples of commercially available monomeric alkylol melamines are Cymel® 301 (degree of polymerization 1.5, 95% methyl and 5% methylol), Cymel® 350 (degree of polymerization of 1.6, 84% methyl and 16% methylol), which are supplied by Cytec Industries, Wet Patterson, New Jersey. Cytec Industries, Inc. also supplies Cymel® 1133 (48% methyl, 4% methylol and 48% butyl), which is a suitable polymeric melamine containing methylol groups.

Most preferably is the reaction between 3-isocyanatopropyltrimethoxysilane and a partially or fully alkylated (e.g., methylated, butylated, and/or isobutylated) alkylol (e.g., methylol, trimethylol, hexamethylol) monomeric or polymeric melamine.

As indicated above, the silylated melamines described herein provide decreased viscosity which help raise spray solids and lower VOC of the coating, without sacrificing scratch, mar and etch resistance, adhesion and final appearance. Typically, such materials are used in the coating in the amounts described below.

The coating compositions of this invention can also include a number of other ingredients to enhance preparation of the composition as well as improve final properties of the coating composition and film finish. For example, it is often desirable to include about 20 to 90%, preferably 20 to 60%, by weight of the total binder in the composition, of a film-forming reactive polymer, preferably an organosilane polymer. Such polymer typically has a number average molecular weight of about 500 to 10,000.

The film-forming component of the coating composition is referred to as the "binder" and is dissolved, emulsified or otherwise dispersed in an organic solvent or liquid carrier. The binder generally includes all the components that contribute to the solid organic portion of the cured composition. Generally, pigments, and chemical additives such as stabilizers are not considered part of the binder. Non-binder solids other than pigments typically do not exceed about 5% by weight of the composition. The term "binder" includes the silylated melamine crosslinking agent described above,

the reactive film-forming polymer, and all other optional film-forming components. As indicated above, the composition of this invention has a relatively high solids content due, in part, to the presence of the melamine component. The composition contains about 50-100% by weight of the binder and about 0-50% by weight of the organic solvent carrier. The composition also has a low VOC (volatile organic content) and meets current pollution regulations.

Preferably, the reactive film forming polymer is an organosilane polymer that is the polymerization product of about 30-95%, preferably 40-60%, by weight of ethylenically unsaturated nonsilane containing monomers and about 5-70%, preferably 40-60%, by weight of ethylenically unsaturated silane-containing monomers, based on the weight of the organosilane polymer. Silane polymers in particular provide for high etch resistant coatings, which is desirable for an automotive finish. Suitable ethylenically unsaturated nonsilane containing monomers are alkyl acrylates, alkyl methacrylates and mixtures thereof, where the alkyl groups have 1-12 carbon atoms, preferably 3-8 carbon atoms.

Suitable alkyl methacrylate monomers used to form the organosilane polymer are methyl methacrylate, ethyl methacrylate, propyl methacrylate, butyl methacrylate, isobutyl methacrylate, pentyl methacrylate, hexyl methacrylate, octyl methacrylate, nonyl methacrylate, lauryl methacrylate and the like. Suitable alkyl acrylate monomers include methyl acrylate, ethyl acrylate, propyl acrylate, butyl acrylate, isobutyl acrylate, pentyl acrylate, hexyl acrylate, octyl acrylate, nonyl acrylate, lauryl acrylate and the like. Cycloaliphatic methacrylates and acrylates also can be used, such as trimethylcyclohlexyl methacrylate, trimethylcyclohexyl acrylate, isobornyl acrylate, isobomyl methacrylate, iso-butyl cyclohexyl methacrylate, t-butyl cyclohexyl acrylate, and t-butyl cyclohexyl methacrylate. Aryl acrylate and aryl methacrylates also can be used, such as benzyl acrylate and benzyl methacrylate. Mixtures of two or more of the above-mentioned monomers are also suitable.

In addition to alkyl acrylates and methacrylates, other polymerizable nonsilane-containing monomers, up to about 50% by weight of the polymer, can be used in the acrylosilane polymer for the purpose of achieving the desired properties such as hardness; appearance; mar, etch and scratch resistance, and the like. Exemplary of such other monomers are styrene, methyl styrene, acrylamide, acrylonitrile, methacrylonitrile, and the like.

Other examples of polymerizable nonsilane-containing monomers include hydroxyl functional monomers such as hydroxyalkyl acrylates and methacrylates, for example, hydroxyethyl acrylate, hydroxypropyl acrylate, hydroxyisopropyl acrylate, hydroxybutyl acrylate, hydroxyethyl methacrylate, hydroxypropyl methacrylate, hydroxyisopropyl methacrylate, hydroxybutyl methacrylate, and the like, and mixtures thereof. Preferably, these monomers are incorporated into the silane polymer to produce a polymer having a hydroxyl number of about 20 to 160. The presence of hydroxy functional monomers enables additional crosslinking to occur between the hydroxy groups and silane moieties on the silane polymer and/or between the hydroxy groups and other crosslinking groups, mainly melamine groups, present in the coating composition

A silane-containing monomer useful in forming the acrylosilane polymer is an alkoxysilane having the following structural formula:

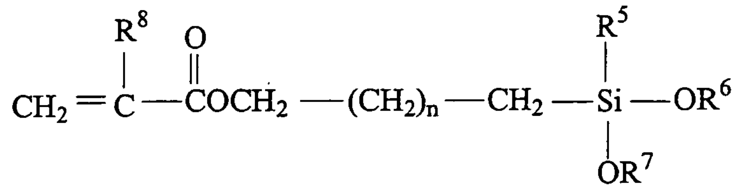

wherein $R^5$ is either $CH_3$ , $CH_3CH_2$ , $CH_3O$, or $CH_3CH_2$ O; $R^6$ and $R^7$ are $CH_3$ or $CH_3CH_2$; and $R^8$ is either H, $CH_3$, or $CH_3CH_2$; and n is 0 or a positive integer from 1 to 10. Preferably, $R^5$ is $CH_3O$ or $CH_3CH_2$ O and n is 1.

Typical examples of such alkoxysilanes are the acryloxy alkyl silanes, such as gamma-acryloxypropyl-trimethoxysilane and the methacryloxy alkyl silanes, such as gamma-methacryloxypropyltrimethoxysilane, and gamma-methacryloxypropyltris(2-methoxyethoxy)silane.

Other suitable alkoxysilane monomers have the following structural formula:

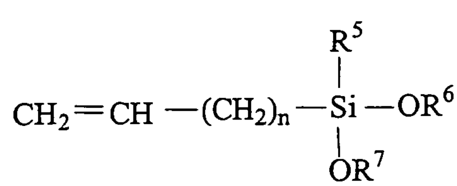

wherein $R^5$, $R^6$ and $R^7$ are as described above and n is 0 or a positive integer from 1 to 10.

Examples of such alkoxysilanes are the vinylalkoxysilanes, such as vinyltrimethoxysilane, vinyltriethoxysilane and vinyltris(2-methoxyethoxy)silane. Other examples of such alkoxysilanes are the allylalkoxysilanes such as allyltrimethoxysilane and allyltriethoxysilane.

Other suitable silane-containing monomers are acyloxysilanes, including acryloxysilane, methacryloxysilane and vinylacetoxysilanes, such as vinylmethyldiacetoxysilane, acryloxypropyltriacetoxysilane, and methacryloxypropyltriacetoxysilane. Of course, mixtures of the silane- containing monomers are also suitable.

Silane functional macromonomers also can be used in forming the silane polymer. These macromonomers are the reaction product of a silane- containing compound, having a reactive group such as epoxide or isocyanate, with an ethylenically unsaturated non-silane-containing monomer having a reactive group, typically a hydroxyl or an epoxide group, that is co-reactive with the silane monomer. An example of a useful macromonomer is the reaction product of a hydroxy functional ethylenically unsaturated monomer such as a hydroxyalkyl acrylate or methacrylate having 1-8 carbon atoms in the alkyl group and an isocyanatoalkyl alkoxysilane such as 3-isocyanatopropyltriethoxysilane.

Typical of such silane-functional macromonomers are those having the following structural formula:

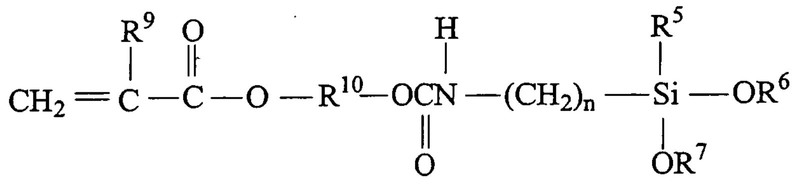

wherein $R^5$, $R^6$ , and $R^7$ are as described above; $R^9$ is H or $CH_3$, $R^{10}$ is an alkylene group having 1-8 carbon atoms and n is a positive integer from 1-8.

In addition to the silane polymers described heretofore, the reactive film-forming polymer can also be a monofunctional silane or silane-containing oligomer that is outside the definition of the silylated melamine compound described above.

In addition to or besides the organosilane polymers described above, other film-forming and/or crosslinking solution polymers can be included in the composition of the present invention. Examples include conventionally known acrylics, cellulosics, aminoplasts, urethanes, polyesters, epoxides or mixtures thereof. One preferred film-forming polymer, which may be used alone or optionally added to the organosilane polymer, is a polyol, for example, an acrylic polyol solution polymer of polymerized monomers. Such monomers can include any of the aforementioned alkyl acrylates and/or methacrylates and, in addition, hydroxyalkyl acrylates or methacrylates. The polyol polymer preferably has a hydroxyl number of about 50-200 and a weight average molecular weight of about 1,000-200,000 and preferably about 1,000-20,000.

To provide the hydroxy functionality in the polyol, up to about 90% by weight, preferably 20 to 50%, of the polyol comprises hydroxy functional polymerized monomers. Suitable monomers include hydroxyalkyl acrylates and methacrylates, for example, such as the hydroxyalkyl acrylates and methacrylates listed hereinabove and mixtures thereof.

Other polymerizable monomers can be included in the polyol polymer, in an amount up to about 50% by weight. Such polymerizable monomers include, for example, styrene, methylstyrene, acrylamide, acrylonitrile, methacrylonitrile, methacrylamide, methylol methacrylamide, methylol acrylamide and the like, and mixtures thereof.

In addition to the above polymeric components, polymer microparticles can also be included in the composition of this invention.

This optional component of the coating composition of the invention is a polymer dispersed in an organic (substantially nonaqueous) medium. This component has been described heretofore as a nonaqueous dispersion (NAD) polymer, a microgel, a nonaqueous latex, or a polymer colloid. In general, the dispersed polymer is stabilized by steric stabilization accomplished by the attachment of a solvated polymeric or oligomeric layer at the particle medium interface.

In the dispersed polymers of the present composition, the dispersed phase or particle, sheathed by a steric barrier, will be referred to as the "macromolecular polymer" or "core". The stabilizer forming the steric barrier, attached to this core, will be referred to as the "macromonomer chains" or "arms".

The dispersed polymers solve the problem of cracking and are used in an amount varying from about 10 to 60% by weight, preferably about 15 to 40%, more preferably about 20 to 30%, of the total binder in the composition. The ratio of the silane compound to the dispersed polymer component of the composition suitably ranges from 5:1 to

1:2, preferably 4:1 to 1:1. To accommodate these relatively high concentrations of dispersed polymers, it is desirable to have reactive groups on the arms of the dispersed polymer, which reactive groups enhance the polymers compatibility with the continuous phase of the system.

The dispersed polymer contains about 10-90%, preferably 50-80%, by weight, based on the weight of the dispersed polymer, of a high molecular weight core having a weight average molecular weight of about 50,000-500, 000. The preferred average particle size is 0.05 to 0.5 microns. The arms, attached to the core, make up about 10-90%, preferably 20-59%, by weight of the dispersed polymer, and have a weight average molecular weight of about 1,000-30,000, preferably 1,000 to 10,000.

The macromolecular core of the dispersed polymer typically comprises polymerized ethylenically unsaturated monomers. Suitable monomers include styrene, alkyl acrylate or methacrylate, ethylenically unsaturated monocarboxylic acid, and/or silane-containing monomers. Such monomers as methyl methacrylate contribute to high Tg (glass transition temperature) whereas such monomers as butyl acrylate or 2-ethylhexyl acrylate contribute to low Tg. Other optional monomers are hydroxyalkyl acrylates, methacrylates or acrylonitrile. Such functional groups as hydroxy in the core can react with silane groups in the silane compound to produce additional bonding within the film matrix. If a crosslinked core is desired, allyl diacrylate or allyl methacrylate can be used. Alternatively, an epoxy functional monomer such as glycidyl acrylate or methacrylate can be used to react with monocarboxylic acid-functional comonomers and crosslink the core; or the core can contain silane functionality.

A preferred feature of the dispersed polymers is the presence of macromonomer arms which contain hydroxy groups adapted to react with the organosilane compound. It is not known with certainty what portion of these hydroxy functional groups react with the organosilane compound because of the numerous and complicated sets of reactions that occur during baking and curing. However, it can be said that a substantial portion of these functionalities in the arms, preferably the majority thereof, do react and crosslink with the film-former of the composition, which in some cases can exclusively consist of an organosilane compound.

The arms of the dispersed polymer should be anchored securely to the macromolecular core. For this reason, the arms preferably are anchored by covalent bonds. The anchoring must be sufficient to hold the arms to the dispersed polymer after they react with the film-former compound. For this reason, the conventional method of anchoring by adsorption of the backbone portion of a graft polymer may be insufficient.

The arms or macromonomers of the dispersed polymer serve to prevent the core from flocculating by forming a steric barrier. The arms, typically in contrast to the macromolecular core, are believed capable, at least temporarily, of being solvated in the organic solvent carrier or media of the composition. They can be in chain-extended configuration with their hydroxy functional groups available for reaction with the silane groups of the film-forming silane-containing compound and polymer. Such arms comprise about 3 to 30% by weight, preferably 10 to 20%, based on the weight of macromonomer, of polymerized ethylenically unsaturated hydroxy functionality-containing monomers, and about 70-95% by weight, based on the weight of the macromonomer, of at least one other polymerized ethylenically unsaturated monomer without such crosslinking functionality. Combinations of such hydroxy monomers with other lesser amounts of crosslinking functional groups, such as silane or epoxy, on the arms are also suitable.

The macromonomer arms attached to the core can contain polymerized monomers of alkyl methacrylate, alkyl acrylate, each having 1-12 carbon atoms in the alkyl group, as well as glycidyl acrylate or glycidyl methacrylate or ethylenically unsaturated monocarboxylic acid for anchoring and/or crosslinking. Typical useful hydroxy-containing monomers are hydroxyalkyl acrylates or methacrylates.

A preferred composition for a dispersed polymer that has hydroxy functionality comprises a core consisting of about 25% by weight of hydroxyethyl acrylate, about 4% by weight ofmethacrylic acid, about 46. 5% by weight of methyl methacrylate, about 18% by weight of methyl acrylate, about 1.5% by weight of glycidyl methacrylate and about 5% of styrene. The macromonomer attached to the core contains 97.3% by weight of prepolymer and about 2.7% by weight of glycidyl methacrylate, the latter for crosslinking or anchoring.

A preferred prepolymer contains about 28% by weight of butyl methacrylate, about 15% by weight of ethyl methacrylate, about 30% by weight of butyl acrylate, about 10% by weight of hydroxyethyl acrylate, about 2% by weight of acrylic acid, and about 15% by weight of styrene.

The dispersed polymer can be produced by dispersion polymerization of monomers in an organic solvent in the presence of a steric stabilizer for the particles. The procedure has been described as one of polymerizing the monomers in an inert solvent in which the monomers are soluble but the resulting polymer is not soluble, in the presence of a dissolved amphoteric stabilizing agent.

Conventional solvents and diluents can be employed as carriers in the composition of this invention to aid sprayability, flow, and leveling. Typical carriers include toluene, xylene, butyl acetate, acetone, methyl isobutyl ketone, methyl ethyl ketone, methanol, isopropanol, butanol, hexane, acetone, ethylene glycol monoethyl ether, VM&P® naphtha, mineral spirits, heptane and other aliphatic, cycloaliphatic, aromatic hydrocarbons, esters, ethers, ketones, and the like. They can be used in amounts of 0 to about 440 grams (or higher) per liter of coating composition. Preferably, they are employed in amounts not exceeding about 340 grams per liter of composition. Other useful carriers will readily

occur to one skilled in the art.

A catalyst is typically added to catalyze the crosslinking of the silane moieties of the silane components with itself and/or with other components of the composition. A wide variety of catalysts can be used, such as dibutyl tin dilaurate, dibutyl tin diacetate, dibutyl tin dioxide, dibutyl tin dioctoate, tin octoate, aluminum titanate, aluminum chelates, zirconium chelate and the like. Sulfonic acids, such as dodecylbenzene sulfonic acid, either blocked or unblocked, are effective catalysts. Alkyl acid phosphates, such as phenyl acid phosphate, either blocked or unblocked, may also be employed. Tertiary amines can be used as well. Any combinations of the aforementioned catalysts may also be useful. Preferably, these catalysts are used in the amount of about 0.1 to 5.0%, based on the weight of the binder. Other useful catalysts will readily occur to one skilled in the art.

The present coating composition can include an additional crosslinking agent, for example, monomeric or polymeric alkylated melamine formaldehyde resin that is partially or fully alkylated. One preferred crosslinking agent is a methylated and butylated or isobutylated melamine formaldehyde resin that has a degree of polymerization of about 1 to 3. Generally, this melamine formaldehyde resin contains about 50% butylated groups or isobutylated groups and 50% methylated groups. Such crosslinking agents typically have a number average molecular weight of about 300-600 and a weight average molecular weight of about 500-1500. Examples of commercially available resins are Cymel® 1168, Cymel® 1161, Cymel® 1158, Resimene® 4514 and Resimene® 354, as well as any of those mentioned above for the silylated melamine component. Preferably, the crosslinking agent is used in the amount of about 5-60% by weight, based on the weight of the binder. Other contemplated crosslinking agents are urea formaldehyde, benzoguanamine formaldehyde and blocked polyisocyanates.

To improve weatherability of a clear finish produced by the present coating composition, an ultraviolet light stabilizer or a combination of ultraviolet light stabilizers can be added in the amount of about 0.1-5% by weight based on the weight of the binder. Such stabilizers include ultraviolet light absorbers, screeners, quenchers, and hindered amine light stabilizers. Also, an antioxidant can be added in the amount of about 0.1-5% by weight based on the weight of the binder. Typical ultraviolet light stabilizers include benzophenones, triazoles, triazines, benzoates, hindered amines and mixtures thereof.

The composition can also include flow control agents such as Resiflow S (acrylic terpolymer solution), BYK 320 and 325 (silicone additives); rheology control agents such as microgel and cellulose acetate butyrate, fumed silica; water scavenger such as tetrasilicate, trimethylorthoformate, triethylorthoformate, and the like.

When the present coating composition is used as a clearcoat (topcoat) over a pigmented colorcoat (basecoat) to provide a basecoat/clearcoat finish, small amounts of pigment can be added to the clear coat to eliminate undesirable color in the finish such as yellowing.

The present composition also can be highly pigmented and used as the basecoat. When the coating composition is used as a basecoat, typical pigments that can be added include the following: metallic oxides such as titanium dioxide, zinc oxide, iron oxides of various colors, carbon black, filler pigments such as talc, china clay, barytes, carbonates, silicates and a wide variety of organic colored pigments such as quinacridones, copper phthalocyanines, perylenes, azo pigments, indanthrone blues, carbazoles such as carbazole violet, isoindolinones, isoindolones, thioindigo reds, benzimidazolinones, metallic flake pigments such as aluminum flake, and the like.

The pigments can be introduced into the coating composition by first forming a mill base or pigment dispersion with any of the aforementioned polymers used in the coating composition or with another compatible polymer or dispersant by conventional techniques, such as high speed mixing, sand-grinding, ball-milling, attritor-grinding or two-roll- milling. The mill base is then blended with the other constituents used in the coating composition.

The coating composition can be applied by conventional techniques such as spraying, electrostatic spraying, dipping, brushing, flowcoating and the like. The preferred techniques are spraying and electrostatic spraying. After application, the composition is typically baked at 100-150°C for about 15-30 minutes to form a coating about 0.1-3.0 mils thick. However, room temperature cure is also effective. When the composition is used as a clearcoat, it is applied over the colorcoat which can be dried to a tack-free state and cured or preferably flash-dried for a short period before the clearcoat is applied. It is customary to apply a clear topcoat over a solvent-borne basecoat by means of a "wet-on-wet" application, i.e., the topcoat is applied to the basecoat without completely drying the basecoat. The coated substrate is then heated for a predetermined time period to allow simultaneous curing of the base and clear coats. Application over waterborne basecoat normally requires some period of drying of the basecoat before application of the clearcoat.

The coating composition of this invention is typically formulated as a one-package system although two-package systems are possible as will occur to one skilled in the art. The one-package system has been found to have extended shelf life.

A typical automobile steel panel or other substrate has several layers of coatings. The substrate is typically first coated with an inorganic rust-proofing zinc or iron phosphate layer over which is provided a primer which can be an electrocoated primer or a repair primer. Optionally, a primer-surfacer can be applied over the primer coating to provide better appearance and/or improved adhesion of the basecoat to the primer coat. A pigmented basecoat or

colorcoat is next applied over the primer-surfacer. A clear topcoat (clearcoat) is then applied to the pigmented basecoat (colorcoat). The colorcoat and clearcoat preferably have thicknesses of about 0.1-2.5 mils and 1.0-3.0 mils, respectively. A composition of this invention, depending on the presence of pigments or other conventional components, can be used as a basecoat, clearcoat, or primer. The composition is useful to coat other substrates as well such as polyester reinforced fiberglass, injection-molded polyurethanes, partially crystalline polyamides and other plastic and metallic substrates as will readily occur to one skilled in the art.

## EXAMPLES

The following Examples illustrate the invention. All parts and percentages are on a weight basis unless otherwise indicated. All molecular weights disclosed herein are determined by GPC using a polystyrene standard.

### Example 1

Preparation of 10% Silylated Melamine 1

A monomeric partially methylated methylol silylated melamine was prepared by charging the following ingredients into a 1-liter round bottom reaction flask equipped with a heating mantle, stirrer, thermometer, nitrogen inlet and a reflux condenser:

| Portion I | Parts by Weight |
|---|---|
| High OH-Melamine (Cymel® 350 from Cytec) | 612.2 g |
| 3-Isocyanatotrimethoxy silane (Silquest® Y-5187 from Crompton) | 66.6 g |
| Xylene | 52.0 g |
| Total | 727.4 |

Portion I was pre-mixed and charged into the reaction flask and heated to 100°C under agitation and a nitrogen blanket. The reaction mixture was held at 100°C while mixing until essentially all of the isocyanate was reacted as indicated by infrared scan. The resulting solution was then cooled to room temperature.

The resulting solution contained Cymel® 350 /Y-5187 in a weight ratio of 90/10. The initial viscosity of Cymel® 350 (adjusted to the same solids as the adduct solution using the same solvent)[1] was $Y^+$ using Gardner Holt bubble viscosity measured at 25°C according to Test Method ASTM D1545-98 wherein the scale goes from A5, low viscosity, to Z10, high viscosity. The resulting 10% silylatedmelamine analog (prepared above) had a viscosity of U on the same scale.

Example Footnote

'The initial viscosity of Cymel® 350 (product off the shelf) was even higher at Z2 when measured on the same scale.

### Example 2

Preparation of 20% Silylated Melamine 2

A monomeric partially methylated methylol silylated melamine was prepared by charging the following ingredients into a 1-liter round bottom reaction flask equipped with a heating mantle, stirrer, thermometer, nitrogen inlet and a reflux condenser:

| Portion I | Parts by Weight |
|---|---|
| High OH-Melamine (Cymel® 350 from Cytec) | 542.1 g |
| 3-Isocyanatotrimethoxy silane (Silquest® Y-5187 from Crompton) | 133.3 g |
| Xylene | 52.0 g |
| Total | 727.4 |

Portion I was pre-mixed and charged into the reaction flask and heated to 75°C under agitation and a nitrogen

blanket. The reaction mixture was held at 75°C while mixing until essentially all of the isocyanate was reacted as indicated by infrared scan. The resulting solution was then cooled to room temperature.

The resulting solution contained the following constituents 350 /Y-5187 in a weight ratio of 80/20. The initial viscosity of Cymel® 350 (adjusted to the same solids as the adduct solution using the same solvent) was $Y^+$ using Gardner Holt bubble viscosity measured at 25°C. The resulting 20% silylated melamine analog (prepared above) had a viscosity of V on the same scale.

**Example 3**

Preparation of 20% Silylated Melamine 3

A polymeric partially butylated silylated melamine was prepared by charging the following ingredients into a 1-liter round bottom reaction flask equipped as above:

| Portion I | Parts by Weight |
|---|---|
| High NH-Melamine (Resimene® BM5503 from Solutia) | 666.66 g |
| Glycidyl propyl trimethoxy silane (Silquest® A-187 from Crompton) | 125 g |
| Portion II Methanol | 15 g |
| Total | 806.66 |

Portion I was pre-mixed and charged into the reaction flask and heated to 75°C under agitation and a nitrogen blanket. The reaction mixture was held at 75°C while mixing for 18 hours. The resulting solution was then cooled to room temperature and Portion II was then added.

The resulting solution contained the following constituents BM5503 /A-187 in a weight ratio of 80/20. The initial viscosity of Resimene® BM 5503 (product off the shelf) was Z+ using Gardner Holt bubble viscosity measured at 25°C. The resulting 20% silylated melamine analog (prepared above) had a viscosity of S on the same scale.

**Example 4**

Preparation of an Acrylic Polyol Resin for Use in Clearcoat Examples

An acrylic polyol resin was prepared by charging the following to a 5-liter round bottom flask equipped as above:

| Portion I | Parts by Weight |
|---|---|
| Xylene | 1400 |
| Portion II | |
| Styrene | 520 |
| Butyl methacrylate | 520 |
| Butyl acrylate | 520 |
| 2-Hydroxyethyl methacrylate | 350 |
| Acrylic Acid | 25 |
| 2,2'-azobis(2-methylbutyronitrile) (Vazo® 67 from DuPont) | 135 |
| Portion III | |
| 2,2'-azobis(2-methylbutyronitrile) (Vazo® 67 from DuPont) | 10 |
| Xylene | 40 |
| Total | 3520 |

Portion I was charged into the reactor and heated to reflux temperature (138°C). Portion II was premixed and then added dropwise to the reaction flask while the reaction mixture was held at reflux temperature, over a 210 minute period. The reaction mixture was then held under agitation at 144°C for 2 hours. Next, Portion III was premixed and added dropwise to the reactor over a period of 20 minutes. The solution was then held at reflux temperature (144°C) for 2 hours.

The resulting acrylic polyol resin was 57.6% by weight solids, and had a weight average molecular weight of about 4488, and a Brookfield viscosity of 192 centipoise.

**Examples 5 and 6 and Comparative Example 1**

Preparation of Clearcoat Compositions

Three clearcoat compositions was prepared by blending together the following ingredients in the order given:

| Material | C.Ex. 1 0% Silated Clearcoat | Ex. 5 10% Silated Clearcoat | Ex. 6 20% Silated Clearcoat |
|---|---|---|---|
| n-Butanol | 12.9 | 12.9 | 12.9 |
| Cymel® 350 | 80.0 | 0 | 0 |
| Melamine Example #1 | 0 | 80.0 | 0 |
| Melamine Example #2 | 0 | 0 | 80.0 |
| Acrylic Example #4 | 193.6 | 193.6 | 193.6 |
| Resiflow® N[1] | 0.2 | 0.2 | 0.2 |
| Nacure®XP-221Lcatalyst[2] | 3.5 | 3.5 | 3.5 |
| Ethoxyethyl Propionate | 9.7 | 9.7 | 9.7 |
| Total | 300.0 | 300.0 | 300.0 |

Table Footnotes

[1] Resiflow® N is a terpolymer solution available from Estron Chemical, Calvert City, Kentucky

[2] Nacure® XP-221L is a solution of dodecylbenzenesulfonic acid available from King Industries, Norwalk, CT

Paint Results:

All paints were tested as prepared. Clearcoats were air spray applied to phosphated steel panel at a thickness of 2.0 mils and baked at 140°C for 30 minutes. The resulting clearcoats of this invention (Exs. 5 and 6) were smooth and essentially free of craters and had excellent appearance and had higher spray solids and lower VOCs when compared to standard clearcoats (C.Ex. 1) free of silylated melamine. The following properties of the clear coated panel were measured and results are tabulated below

| Test | C. Ex. 1 0% Silated Clearcoat | Ex. 5 10% Silated Clearcoat | Ex. 6 20% Silated Clearcoat |
|---|---|---|---|
| Viscosity #4 Ford Cup seconds | 27 | 26 | 24.5 |
| Wt per Gallon | 8.24 | 8.64 | 8.68 |
| % Non Volatile | 50.59 | 56.77 | 58.48 |
| Volatile Organic Content 4.07 (lbs/gal) | 3.74 | 3.60 | |
| Acid Rain Resistance[1] (depth of etch in mm) | 1.9 | 0.84 | 0.75 |
| Water Soak[2] [depth of spot in mm] | 0.27 | 0.23 | 0.21 |

Table Footnotes

[1] Acid Rain Resistance was tested as per Toyota Specification for Synthetic Acid Rain. 5 cc's of Toyota TSR solution is placed on panel sitting on a hot plate at 70 degrees C for 3 hours. Depth of etch is measured by a profilometer. Final number is an average of ten runs.

[2] Water Soak was measured using 5 cc's of tap water placed on panel sitting on a hot plate for 1 hour at 60 degrees C. Depth of etch is measured by a profilometer. Final number is an average of 10 runs.

Various modifications, alterations, additions or substitutions of the component of the compositions of this invention will be apparent to those skilled in the art without departing from the spirit and scope of this invention. This invention is not limited by the illustrative embodiments set forth herein, but rather is defined by the following claims.

**Claims**

1. A monomeric or polymeric melamine crosslinking agent with attached functional silane groups which is the reaction product of a monomeric or polymeric alkylated melamine with an alkoxy silane monomer having at least one functional group reactive with said melamine.

2. The composition of claim 1, wherein the monomeric or polymeric melamine crosslinking agent is the reaction product of

a) a monomeric or polymeric alkylated melamine containing at least one imino group with an epoxy functional alkoxy silane monomer, or

b) a monomeric or polymeric alkylated melamine containing at least one alkylol group with an isocyanate functional alkoxy silane monomer.

3. A melamine crosslinking agent with attached functional silane groups selected from the group consisting of at least one member of group (a) and (b):

a) the reaction product of a melamine of the formula

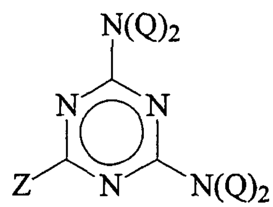

with

an epoxy-functional alkoxysilane of the formula

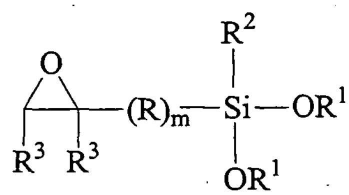

wherein

each Q is independently selected from the group consisting of hydrogen or alkoxy groups, provided at least one Q is hydrogen, and

Z is selected from the group consisting of a group represented by the formula $-N(Q)_2$, or a group represented by the formula

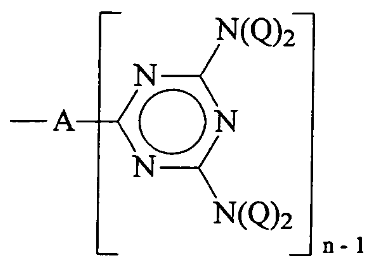

wherein
A is an N-functional anchor,
n is at least 2, and
Q is as defined above;

each R is a moiety independently selected from the group consisting of alkylene, cycloalkylene, heterocyclic, arylene, alkoxylene, aralkylene, alkenylene, cycloalkylene and low molecular weight polymer moiety;
each $R^1$ is independently hydrogen or $C_1$-$C_{12}$ alkyl;
each $R^2$ is independently hydroxy or $C_1$-$C_{12}$ alkyl or $C_1$-$C_{12}$ alkoxy;
each $R^3$ is independently hydrogen or $C_1$-$C_{12}$ alkyl; or $R^3$ can be taken together to form a $C_3$-$C_{12}$ cycloalkyl; and,
m is an integer from 1 to 16; and

b) the reaction product of a melamine of the formula

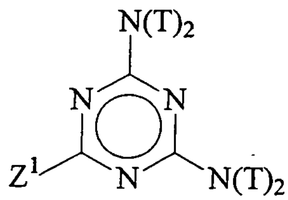

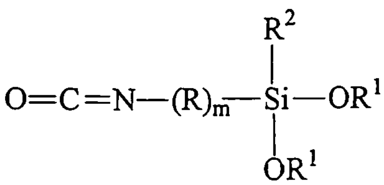

with
an isocyanate-containing alkoxysilane of the formula

wherein
each T is independently selected from the group consisting of $C_1$-$C_{12}$ alkylol or alkoxy groups, provided at least one T is an $C_1$-$C_{12}$ alkylol group;
$Z^1$ is selected from the group consisting of a group represented by the formula -$N(T)_2$, or a group represented by the formula

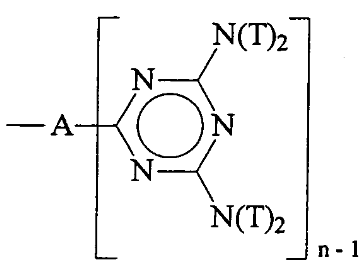

wherein
A, T and n are as defined above; and
R, $R^1$ and $R^2$ and m are as defined above.

**4.** A coating composition having a binder comprising a film-forming polymer reactive with melamine and a melamine

crosslinking agent, wherein the improvement is the use of a monomeric or polymeric melamine crosslinking agent with attached functional silane groups which is the reaction product of a monomeric or polymeric alkylated melamine with an alkoxy silane monomer having at least one functional group reactive with said melamine.

**5.** A coating composition comprising a film-forming reactive organosilane polymer, a volatile organic liquid carrier, a polymer microparticle dispersion, a melamine crosslinking agent and an organic polyol, wherein the improvement is the use of a monomeric or polymeric melamine crosslinking agent with attached functional silane groups which is the reaction product of

a) a monomeric or polymeric alkylated melamine containing at least one imino group with an epoxy functional alkoxy silane monomer, or

b) a monomeric or polymeric alkylated melamine containing at least one alkylol group with an isocyanate functional alkoxy silane monomer.

**6.** The coating composition of claim 5, wherein said composition is a clearcoat for a basecoat/clearcoat finish.

**7.** The coating composition of claim 5, wherein the improvement is the use of a monomeric or polymeric melamine crosslinking agent with attached functional silane groups which is the reaction product of

a) a melamine of the formula

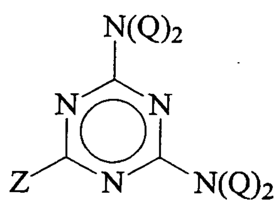

with

an epoxy-functional alkoxysilane of the formula

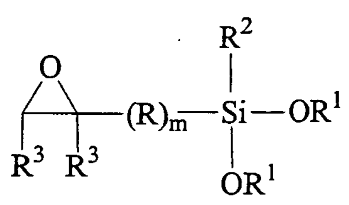

or,

b) a melamine of the formula

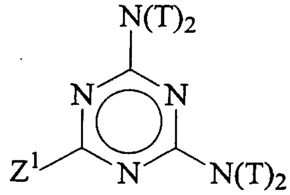

with

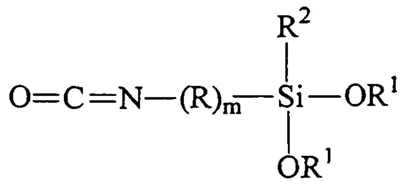

an isocyanate-containing alkoxysilane of the formula

wherein
each Q is independently selected from the group consisting of hydrogen or alkoxy groups, provided at least one Q is hydrogen, and
Z is selected from the group consisting of a group represented by the formula $-N(Q)_2$, or a group represented by the formula

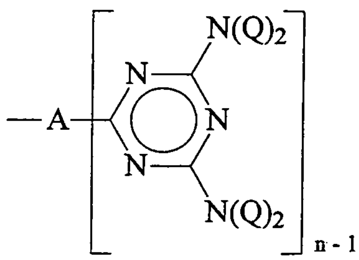

wherein
A is an N-functional anchor,
n is at least 2, and
Q is as defined above;
each R is a moiety independently selected from the group consisting of alkylene, cycloalkylene, heterocyclic, arylene, alkoxylene, aralkylene, alkenylene, cycloalkylene and low molecular weight polymer moiety;
each $R^1$ is independently hydrogen or $C_1$-$C_{12}$ alkyl;
each R2 is independently hydroxy or $C_1$-$C_{12}$ alkyl or $C_1$-$C_{12}$ alkoxy;
each $R^3$ is independently hydrogen or $C_1$-$C_{12}$ alkyl; or $R^3$ can be taken together to form a $C_3$-$C_{12}$ cycloalkyl;
m is an integer from 1 to 16; and
each T is independently selected from the group consisting of $C_1$-$C_{12}$ alkylol or alkoxy groups, provided at least one T is an $C_1$-$C_{12}$ alkylol group; and
$Z^1$ is selected from the group consisting of a group represented by the formula $-N(T)_2$, or a group represented by the formula

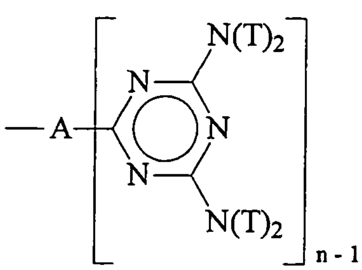

wherein
A, T and n are as defined above.

**8.** A process for coating a substrate, comprising:

a) applying a layer of a pigmented basecoating to the substrate to form a basecoat thereon;
b) applying to the basecoat a layer of the composition of claim 5 to form a topcoat over said basecoat;
c) curing the basecoat and topcoat to form a basecoat and topcoat on the substrate.

**9.** A substrate coated with the dried and cured composition of claim 5.

**10.** An automobile or truck clear coated with the dried and cured composition of claim 5.